# EUROPEAN PATENT APPLICATION

(11) **EP 0 932 016 A2**
(43) Date of publication of application: **28.07.1999**
(21) Application number: 98124122.7
(22) Date of filing: 18.12.1998
(51) Int. Cl.: G01B 3/10

(54) **Automatically retracting tape measure with quick-acting manual tape-braking system**

(30) Priority: 26.01.1998 IT MI980135
(71) Applicant: METRICA S.p.A., 36071 Arzignano (IT)
(72) Inventor: Doriguzzi Bozzo, Mario, 20097 San Donato Milanese (MI) (IT)
(74) Representative: Ripamonti, Enrico, Dr. Ing.

(57) **Abstract**

An automatically retracting tape measure (1) comprises a case (2) containing a graduated tape (5) unwindable from an elastically loaded rotary drum (7), said tape (5) emerging from the case through an exit slot (4), a movable braking member (15) being provided to cooperate with the tape (5) so as to brake its movement of retraction into the case. An end part (20) of said movable member (15) provided in proximity to or in correspondence with said exit slot (4) is arranged to cooperate with a counteracting element (25) positioned above said end part (20), so as to form together with the counteracting element a gripping brake element.

## Description

This invention relates to a tape measure in accordance with the introduction to the main claim.

As is well known, most commercially available tape measures provide automatic tape retraction by the action of a preloaded spring wound on a drum, and a device for locking the tape when this has been unwound to the desired length. Of the most widespread locking devices, a first type of locking, which can be defined as "positive", is obtained by compressing against the tape, either snapwise or by a lever or by sliding, a suitably guided thin blade which is of convex shape in its lower part to match the graduated concave face of the convex tape. A second type of locking, which can be defined as "negative", is obtained by the action of a spring which constantly maintains said blade or an equivalent mechanism pressed against the tape, which hence remains permanently locked except when the spring force is overcome by a pushbutton device operated by the operator, to hence release the tape and enable it to be extracted from its case.

Positive locking is not as instantaneous as negative locking, as the operator has manually to shift the locking device through a certain distance (usually of the order of about 10 mm), this also requiring a certain force. This movement is rather impractical because it is slow and somewhat tiring especially when several successive measurements have to be made. This lack of practicality is however also a feature of negative locking because when making several successive measurements the operator has to continuously release the said blade (and maintain it spaced from the tape) in order to make the desired measurements.

However, neither type of locking device can brake the automatic tape retraction, which can wound the operator's hand, in particular the fingers, because of the force of the retraction spring and the edge sharpness of the tape, which is usually of thin hardened steel.

Additionally, in known tape measures, to damp the blow which occurs when the hook usually provided at the free end of the graduated tape hits against the tape measure case, this latter is normally provided at the tape exit slot with a damper consisting of a small shaped plastic component (for example of flat spring or functionally equivalent shape) housed in a relative seat provided in the case. This damper elastically shortens as a result of the blow due to its impact with the hook.

To obviate the said problems regarding rapid and violent tape retraction, a braking device is known acting directly on the drum which rotates as the tape unwinds and rewinds. This is described for example in EP-0531507. The known device, although having the merit of immediate intervention as it locks the drum, provides tape locking only when this is under tension. In this respect it acts as a brake only against further tape extraction, but cannot prevent the tape, if pushed into the case, from retracting and wrapping loosely about the locked drum.

Another known solution consists of a quick-braking device positioned in the bottom of the tape measure and comprising, pivoted to the case, a suitably shaped lever which when required makes contact with the convex part of the tape within the case, almost in a position tangential to the drum diameter. However this known solution has the limit of being effective only along the initial portion of the tape, or rather when the tape is extracted from the case only to a limited extent. In this respect, the more the tape is extracted, the more the diameter of that part of the tape remaining wound about the drum decreases. Consequently the angle of approach of the tape to the case exit slot increases, so that the tape assumes a position unattainable by said lever as it lies beyond the travel limit of this latter, any braking activity by the lever being impossible beyond this limit.

An object of this invention is to provide a tape measure which is improved relative to known tape measures.

A particular object of the invention is to offer a tape measure provided with an instantaneous braking device, possibly additional to the graduated tape locking device, in which the tape can be locked both when under tension and when under compression by manual control by the operator, independently of the extent of unwinding of the tape, and in which the tape can be braked during automatic retraction.

A further object is to offer a tape measure provided with a simple but effective damper at the tape exit slot, said damper being able to absorb and damp the stresses generated on the case by the tape hook on halting at the end of tape retraction into the case.

A further object is to provide a tape measure of simple and economical construction which offers instantaneous locking and release, and is hence practical in the case of repeated and frequent measurements, and safe in that the tape can retract slowly by the action of friction.

These and further objects which will be apparent to an expert of the art are attained by a tape measure in accordance with the accompanying claims.

The invention will be more apparent from the accompanying drawing, which is provided by way of non-limiting example and on which;
Figure 1 is a side view of a tape measure of the invention, with some parts removed for clarity;
Figure 2 is an enlarged perspective view of a part of the tape measure of Figure 1 during use, and specifically during the braking of the graduated tape;
Figure 3 is a perspective view of a part of the tape measure of Figure 1;
Figure 4 is a front view of that part of the tape measure shown in Figure 3;
Figures 5 and 6 are front views of two constructional variants of the tape measure of Figure 1;
Figures 7 to 10 show different embodiments of that tape measure part of Figure 3;
Figure 11 is a partial section through that tape measure part shown in Figure 10, taken on the line 11 of this latter; and
Figure 12 is a section similar to Figure 11 showing a variant of the part represented therein.

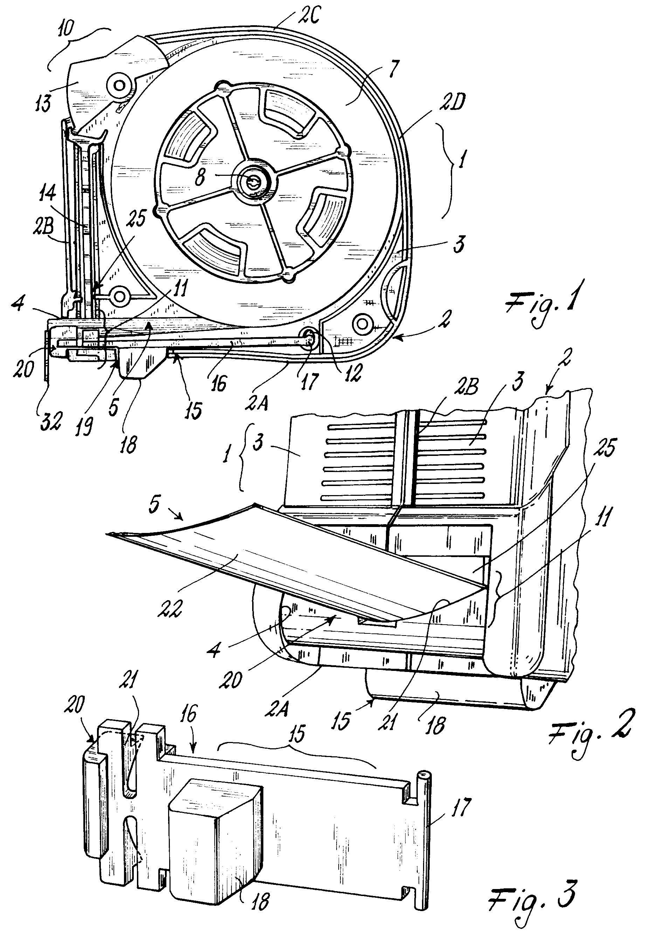

With reference to said figures, and in particular to Figures 1 to 5, a tape measure according to the invention is indicated overall by 1 and comprises a case 2 consisting of two removably connectable half-cases 3. The case 2 comprises sides 2A, 2B, 2C, 2D, and in correspondence with the sides 2A and 2B has a slot 4 through which a graduated tape 5 can emerge. This latter unwinds from a drum 7 rotating about a pin 8 against the action of an elastic return element (not shown). In the embodiment under examination the tape measure 1 comprises (but not necessarily) a device 10 for locking the tape 5 in the extracted position and a device 11 for braking its movement, for example during its automatic retraction into the case 2 after its unwinding from the drum 7.

The device 10, which is of the "positive" type described in the introductory part of this document, is generally known, and will therefore not be described in detail. It comprises a pushbutton 13 for moving a laminar element 14, the purpose of which is to cooperate with the tape 5 in order to lock it in the extracted position.

The device 11 comprises a lever member 15 with a substantially laminar body 16 having one end 17 formed as one piece therewith or by means of one or two added pins, and pivoted (at 12) to the case 2 (or rather to its half-cases 3). From the body 16 (shaped to never interfere with the drum 7 so as to in no way impede its rotation) there extends an element 18 arranged to penetrate into a hole 19 provided in the case 2, advantageously in the side 2A thereof, and to emerge from it to act as a pushbutton for operating the device 11. The lever member 15 also has one end 20 positioned in correspondence with the slot 4. This end is concave in its upper surface part 21 to reproduce the convex curvature of the lower face 22 of the graduated tape 5 lying above the member 15. This upper part or concave surface is defined by two circular arcs which match the two lateral edges of the concave tape 5.

The member 15 is not subjected to any elastic force but only to its own weight, and is able to assume two working positions, namely a first position (Figures 2, 5 and 6) in which it cooperates with the tape 5 to achieve braking (as described hereinafter), and a second working or rest position (Figure 1) in which it acts as a simple support for said tape, enabling it to freely move out of and into the case 2. Passage from the first to the second working position occurs by simple gravity without it being forced by any external member, whereas the reverse passage occurs by manual lifting, by acting on the element 18.

At the slot 4, above the end 20 of the member 15, there is provided a counteracting element 25 which together with the member 15 (or specifically with the concave part 21 of its end 20) defines a gripping element for braking the tape 5. The counteracting element 25 comprises an at least partly convex counteracting surface 26, which cooperates with the upper concave surface 28 of the tape 5 when this is braked by friction whenever the member 15 is in its first working position. The surface 26, which advantageously at least partly reproduces the tape surface 28, prevents dust, earth or the like entering the case 2 by considerably limiting the size of the slot 4 (while allowing passage for the free movement of the tape when not braked or locked).

In the embodiment under examination, in which the tape measure comprises the locking device 10 (of positive type), the counteracting element consists of that end of the blade or laminar element 14 situated above the tape 5. If the tape measure does not comprise a locking device (Figure 6), the counteracting element 25 is either formed in or applied directly to the case 2 in a position corresponding with the slot 4. Said element is thus fixed and can comprise two circular arcs fixed to the case 2 to match the lateral edges of the tape 5.

As the gripping element is provided at said slot 4 (or close to it), its braking or locking action on the tape is exerted whatever length of tape is extracted from the case 2.

According to another characteristic of the invention, the tape measure 1 comprises damper means 31 for a hook 32 associated with the free end of the tape 5, said damper means being able to gradually absorb the kinetic energy of said hook on termination of the fast return travel of the tape 5 into the case 2. According to the invention, these damper means form part of the gripping element for braking the tape, and are associated with the lever member 15.

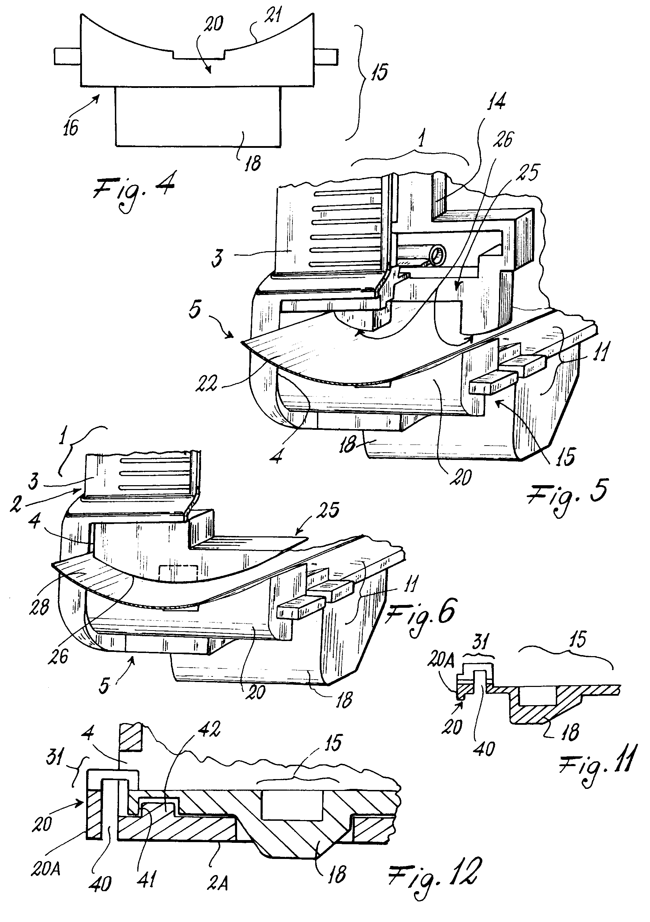

For this purpose, this latter is shaped at its outer end 20 such that it can undergo elastic compression along its longitudinal axis K (see Figures 7 to 12). The end 20, acting as a damper, can assume various yieldable configurations, such as to undergo said compression under the thrust of the hook 32 when the tape is drawn into the case 2 by the effect of the return spring acting on the drum 7. For example, said end can comprise a portion 20A associated with an arched part 35 separated from the remaining body 16 of the member 15 by a semicircular recess (Figure 7), or said portion 20A can be associated with the remaining body 16 by a plurality of V-shaped or fret-shaped yieldable elements 37 of small thickness compared with their length, so as to flex under the thrust of the hook 32 exerted on the end 20 on termination of the return travel of the tape 5. This latter solution can take two constructional forms, shown in Figures 8 and 9 respectively.

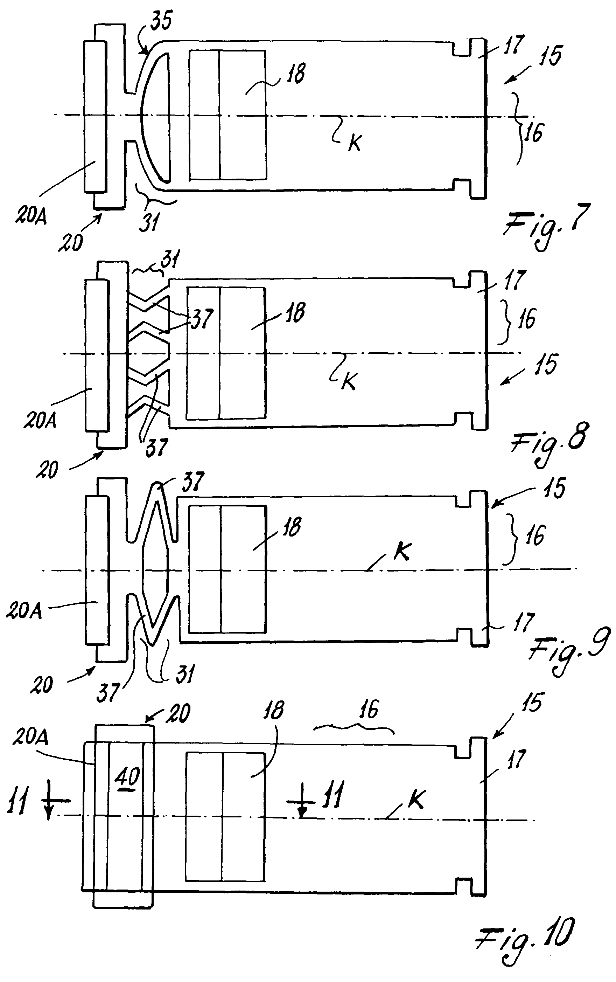

In a further variant (Figures 10, 11 and 12), the elastically yieldable end 20 of the lever member 15 is shaped as an inverted U outwards from the case 2 to define substantially an elastic bridge, of rectangular cross-section with a recess 40 in its lower central part to enable the most outer portion 20A of said end 20 to flex elastically under the pressure of the hook as it is struck by this latter. In order to achieve substantial flexure (so that the damper means defined by the particular shape of the end 20 of the lever member 15 are effective), the recess 40 must be sufficiently deep, such that the barycentre of the hook impact force against the member 15 can have a sufficient lever arm to bend that portion 20A which directly undergoes the impact.

A further improvement to the latter described solution is obtained by providing a stop, formed by a tooth 41 (or a recess) on the outer terminal part 20 of the lever member 15 which, when this latter is in its rest or unraised position, abuts against a step 42 (or tooth) on the case 2 of the tape measure 1. In this manner the impact caused by the hook 32 is discharged onto the whole case 2 rather than only onto that end 17 of said member 15 hinged to the case, so preventing damage to the hinge connection 12 between this end and said case.

Figure 12 shows a possible embodiment of said abutment stop.

It will be noted that when the lever member is shaped to also act as a damper, its terminal part 20 emerges from the profile of the case 2 through the tape extraction slot 4, which is hence shortened lowerly (undercut) by a few millimetres, sufficient to enable the damper means 31 to perform its function by undergoing compression under the thrust of the hook 32.

It will now be assumed that the tape measure 1 is to be used. When the element 18 acting as the pushbutton is pressed, the lever member 15 rotates about the hinge 12 to interfere via its end 20 with the tape, and generate initially an effect of slowing down the tape 5 by friction between its concave upper part 21 and the convex lower surface 22 of the tape 5. As the lever member is further pressed towards the case 2 the tape 5 stops by being squeezed against the surface 26, which at least partly reproduces the curvature of the upper surface 28 of the tape present within the case 2. Consequently the gripping element defined by the terminal part 20 of the member 15 and the counteracting element 25 can, when tightened, result in braking and stoppage of the tape 5 (stoppage being a particular case of braking). On releasing the pushbutton 18, the gripping element opens because the member 15 withdraws by gravity from the counteracting element and moves into its second working position (or rest position), and the tape is free to again move. It should be noted that when in this rest position, the terminal part 20 of the lever member 15 acts as a support pad for the tape 5 during its movement, and hence even with the gripping element open there is always slight rubbing friction between the tape and said member.

With the tape extracted and without the device 11 being activated (ie with the gripping element neither totally nor partly tightened), the tape retraction into the case terminates with final contact between the hook 32 and the end 20 of the lever member 15. As this end is shaped to act as a damper, this contact is damped by the elastic compression of said end, without the force exerted by the hook damaging the hinge 12 or the lever member 15.

By virtue of the invention, a tape measure is obtained with functional braking means which do not undergo wear with time or performance fall-off due to decay of their parts (as happens for example in braking means comprising elastic members). The means are also economically advantageous as they comprise only a small number of parts, and in the limit even just one part. With the tape measure of the invention the tape can be slowed down at will during its return into the case, so safeguarding the operator's fingers against accidental wounding caused by too rapid tape return into said case, so also protecting this latter against possible damage. Furthermore the described braking means can also lock the tape in a particular extracted position, such locking however being only maintainable by continuous activation of said means.

## Claims

1. An automatically retracting tape measure (1) comprising a case (2) having a plurality of sides (2A, 2B, 2C, 2D) and containing a graduated tape (5) unwindable from an elastically loaded rotary drum (7), said tape (5) emerging from the case through an exit slot (4) provided in one of said sides (2B), a movable braking member (15) being provided to cooperate, when in a first working position, with the tape (5) below which it lies, so as to brake its movement of retraction into the case, but to allow this movement to take place freely when said member (15) is in a second working position or rest position, with said tape (15) then simply resting on the terminal part (20) of said member, passage from the first to the second position taking place by gravity, and vice versa from the second to the first position by manually lifting said member, characterised in that, when the movable member (15) is in its first working position, an end part (20) of said movable member (15) present in proximity to or in correspondence with said exit slot (4) cooperates with a counteracting element (25) positioned above said end part (20) and in proximity to said slot (4), so as to form together with the counteracting element (25) a gripping brake element which can be manually tightened at will, and which automatically opens by simple gravity when released.

2. A tape measure as claimed in claim 1, characterised in that the gripping element comprises damper means (31) arranged to damp the stresses generated by the tape (5) on the case (2) and/or on the braking member on its re-entry into said case.

3. A tape measure as claimed in claim 1, characterised in that the movable member (15) is hinged (at 12) at one end (17) to the case (2) and has a portion (18) emerging from an aperture (19) in this latter to act as the activation member for the gripping brake element.

4. A tape measure as claimed in claim 1, characterised in that the end part (20) of the movable member (15) comprises a concave upper part or surface (21) arranged to cooperate with the tape (5) lying above it, the counteracting element (25) comprising a convex surface or part (26) arranged to at least partly cooperate with said tape and to cooperate operationally with said concave surface (21) to brake said tape (5).

5. A tape measure as claimed in claim 4, characterised in that the curvature of the convex surface (26) and the curvature of the concave surface (21) of the gripping element follow the pattern of the upper surface (28) and lower surface (22) of the graduated tape (5) respectively, such as to achieve braking of the tape by friction when the gripping element is tightened.

6. A tape measure as claimed in claim 1, characterised in that the counteracting element (25) is a fixed element associated with the case (2) in correspondence with the slot (4).

7. A tape measure as claimed in claim 6, characterised in that the counteracting element (25) comprises two combined circular arcs defining the convex surface (26) and mating with the lateral edges of the graduated tape (5).

8. A tape measure as claimed in claim 1, characterised in that the counteracting element (25) forms part (14) of means (10) for locking the graduated tape (5) with which the tape measure may be provided.

9. A tape measure as claimed in claim 2, characterised in that the damper means (31) are associated with the movable member (15).

10. A tape measure as claimed in claim 9, characterised in that the damper means (31) form part of the movable member (15), said means comprising the end part (20) of said member and incorporating means (20A; 35, 37) which yield elastically when subjected to the action of a compressive force, such as that generated by a terminal part (32) of the graduated tape on said end (20), exerted in a direction substantially parallel to the longitudinal axis (K) of said member (15).

11. A tape measure as claimed in claim 10, characterised in that the end part (20) of the movable member (15) comprises a terminal portion (20A) connected to the remaining part of the body (16) of said member via an elastically yieldable arched part (35) defining the damper means.

12. A tape measure as claimed in claim 10, characterised in that the end (20) of the movable member (15) comprises a terminal portion (20A) connected to the remaining part of the body (16) of said member via V-shaped elastically yieldable elements (37) defining the damper means.

13. A tape measure as claimed in claim 10, characterised in that the end (20) of the movable member (15) is shaped as an elastic bridge and comprises an elastically yieldable terminal flat part (20A) separated from the remaining part of the body (16) of said member by a downwardly-facing recess (40) sufficiently deep to enable the flat part (20A) to flex elastically.

14. A tape measure as claimed in claim 1, characterised in that the end part (20) of the movable member comprises engagement means (41) arranged to cooperate with counter-means (42) provided in the adjacent side (2A) of the case, the cooperation between said means and counter-means enabling the kinetic energy of the tape (5) undergoing retraction into the case (2) to be directly transferred to the case.

15. A tape measure as claimed in claim 14, characterised in that the engagement means consist of a tooth (41) or recess provided preferably in the end part (20) of the movable member, the engagement counter-means being a step (42) or tooth provided in the side (2A) of the case (2).
